Europäisches Patentamt

European Patent Office

Office européen des brevets

(19)

(11) Publication number : **0 218 353**
**B1**

(12) **EUROPEAN PATENT SPECIFICATION**

(45) Date of publication of patent specification :
09.08.89

(51) Int. Cl.⁴ : **G 21 C   3/34**

(21) Application number : 86306630.4

(22) Date of filing : 28.08.86

(54) Grid-spring repair apparatus.

(30) Priority : 05.09.85 US 772986

(43) Date of publication of application :
15.04.87 Bulletin 87/16

(45) Publication of the grant of the patent :
09.08.89 Bulletin 89/32

(84) Designated contracting states :
BE FR GB SE

(56) References cited :
EP–A– 0 047 422
DE–A– 3 242 407
FR–A– 2 289 878
FR–A– 2 532 223
FR–A– 2 550 650

(73) Proprietor : **WESTINGHOUSE ELECTRIC CORPORA-**
**TION**
**Westinghouse Building Gateway Center**
**Pittsburgh Pennsylvania 15235 (US)**

(72) Inventor : **Widener, Wade Hampton**
**1502 Granby Road**
**Cayce South Carolina 29033 (US)**

(74) Representative : **van Berlyn, Ronald Gilbert**
**23, Centre Heights**
**London, NW3 6JG (GB)**

Jouve, 18, rue St-Denis, 75001 Paris, France

EP 0 218 353 B1

## Description

The present invention relates generally to fuel assemblies for nuclear reactors and, more particularly, to an apparatus for repairing grid springs which protrude improperly from outer straps of a grid of a nuclear fuel assembly.

In most nuclear reactors, the reactor core is composed of a large number of elongate fuel assemblies each including a plurality of fuel rods which are held in an organized array by a plurality of grids spaced apart longitudinally of the fuel assembly and attached to elongate control-rod guide thimbles thereof. Top and bottom nozzles at opposite ends of the fuel assembly are secured to end portions of the guide thimbles extending above and below the ends of the fuel rods.

As well known in the art, these grids are used to maintain a precise spacing between the fuel rods, to prevent rod vibration, to provide lateral support for the fuel rods, and, to some extent, to frictionally retain the rods against longitudinal movement. Conventional designs of grids include a multiplicity of inner straps interleaved in an egg-crate-like manner to define open cells which individually accept the fuel rods and control rod guide thimbles. The strap portions which define fuel-rod receiving cells are provided with resilient springs and relatively rigid protrusions (called dimples) formed out of the metal of the interleaved straps and protruding inwards of the respective cells to frictionally engage the respective fuel rods extending therethrough. Such conventional grid includes also outer straps which are joined together at their ends and have connected thereto the terminal ends of the inner straps, thereby imparting strength and rigidity to the grid. The outer straps conventionally have springs formed integral therewith from the metal thereof which springs project into the respective cells disposed along the perimeter of the grid.

Since the fuel rods are subjected to radiation during operation of the reactor core, it is desirable that the supporting forces imposed by the grid on the fuel rods be such that the grid will adequately support the fuel rods but will not promote lengthwise distortion thereof over the time. Moreover, since the grids are irradiated together with the fuel rods which they support, they inherently degrade with the passage of time. In particular, the metal of the straps forming the grid, hence of the springs and dimples formed therefrom, is subject to stress relaxation due to irradiation occurring over the life of a fuel assembly.

Under these conditions, some of the grid springs formed on the outer straps of a grid occasionally become deformed in a way causing portions thereof to protrude outward from the grid, whereby the ability of such grid springs to properly support fuel rods is impaired and, in addition, the outwardly protruding spring portions create a risk of interference with the grids of neighboring fuel assemblies forming part of the same core. Therefore, it is desirable to restore any outwardly deformed grid springs to their normal positions, which conventionally is usually done by applying light impact forces with the aid of a plastic mallet and an adjustment block. This conventional technique of correcting grid spring deformation is less than ideal, not only because the application even of light impacts upon fuel assemblies during repair is undesirable, but also because this technique is lacking uniformity with regard to its results and the repair quality attainable therewith. Another tool for grid-spring repair is known from EP-A-47422, which discloses an apparatus comprising a remote controlled-grab which is introduced in the fuel grid to straighten out the deformed springs.

If is the principal object of the invention to provide an apparatus allowing grid-spring repair to be performed without these drawbacks.

The invention accordingly resides in a grid-spring repair apparatus for repairing a spring formed on an outer strap of a nuclear fuel-assembly grid and having a portion which abnormally protrudes outward from the strap, characterized by : (a) a support frame defining an elongate opening and having means defining guide channels along opposite longitudinal sides of the elongate opening ; (b) attaching means for attaching said support frame to said outer strap of the fuel-assembly grid in a manner such that said elongate opening extends over and across said spring on the outer strap ; (c) an outer slide which defines a window-like opening and is supported in said guide channels for reciprocable movement of the outer slide within said elongate opening in the longitudinal direction thereof so as to permit said window-like opening to be aligned with the abnormally protruding portion of the spring, said outer slide including means defining a guideway which extends along the window-like opening in a second direction substantially orthogonal with respect to said longitudinal direction ; (d) a spring resetting mechanism for restoring said abnormally protruding portion of the spring to a normal position thereof relative to the outer strap ; and (e) an inner slide which supports said spring resetting mechanism and is supported in said guideway for reciprocable movement of said inner slide within the window-like opening of the outer slide in said second direction so as to permit the spring resetting mechanism to be aligned with the abnormally protruding portion of said spring.

This grid-spring repair apparatus of the invention is universally adaptable for use in all spring locations on all outer grid straps, and it enables abnormally protruding springs to be reset by applying thereto a constant load rather than impact forces. It also assures repeatability and uniformity of spring repairs.

In a preferred embodiment of the invention to be described in detail later herein, the support frame of the grid-spring repair apparatus is formed of frame members interconnected so as to define said elongate opening in substantially rectangular configuration, and the means defining said guide channels are pairs of rails which are connected to the interconnected frame members and extend along the respective longitudinal sides of the elongate opening. The attaching means of the apparatus comprises several frame attaching devices which are mounted on the support frame and spaced apart in said longitudinal direction on opposite sides of the elongate opening therein, at least one of these frame attaching devices being adjustable on and relative to the mounting frame.

The outer slide is in the form of a rectangular housing which has guideway-defining means for the inner slide formed in sides thereof extending in said second direction. The inner slide is in the form of a block supporting the spring resetting mechanism and slideably supported in said guideway.

The spring resetting mechanism comprises a resetting pin which is slideably supported in the inner slide, and a screw which is threadedly supported in said inner slide substantially in axial alignment with the resetting pin and is operable to move the pin in a spring-restoring direction toward and against the abnormally protruding portion of the grid spring so as to urge it toward the original normal position thereof. The resetting pin has an enlarged portion which cooperates with a stop surface on the inner slide to limit movement of the resetting pin in said spring-restoring direction.

The preferred embodiment of the invention will now be described, by way of example only with reference to the accompanying drawings, in which :

Fig. 1 is an elevational view, partly in section, of a nuclear fuel assembly shown in vertically foreshortened form ;

Fig. 2 is an enlarged fragmentary elevational view of an outer grid strap of one of the support grids on the fuel assembly of Fig. 1 ;

Fig. 3 is a perspective view of the grid-spring repair apparatus embodying the invention ; and

Fig. 4 is an enlarged sectional view of the grid-spring repair apparatus as taken along line 3-3 of Fig. 3 and showing the apparatus mounted on an outer grid strap.

In the following description, like reference characters designate like or corresponding parts throughout the several views, and terms such as « forward », « rearward », « left », « right », « upwardly », « downwardly », and the like are employed as words of convenience not to be construed as limiting terms.

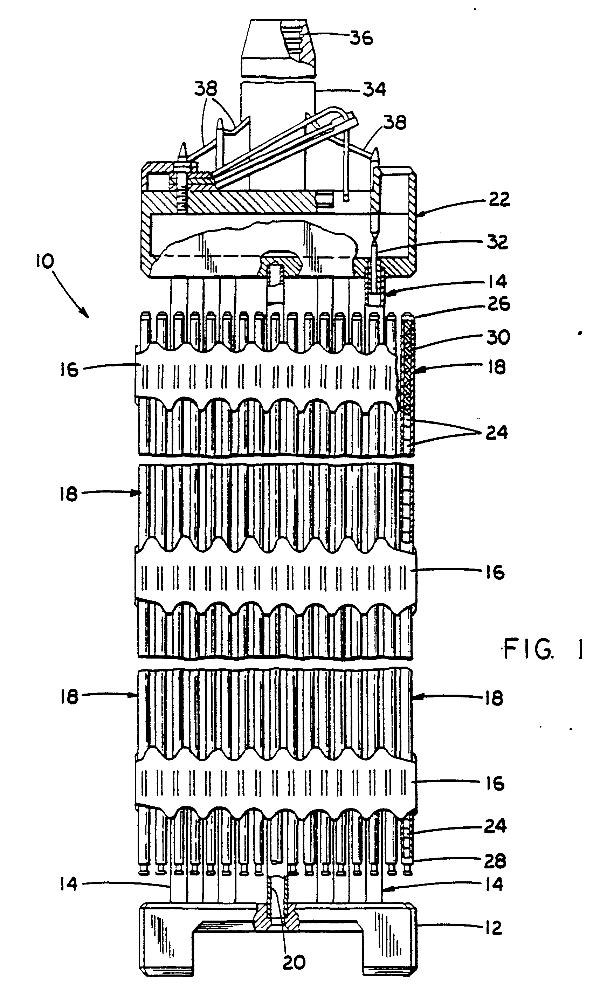

Referring now to the drawings, and particularly to Fig. 1, the fuel assembly shown therein and being generally designated with numeral 10 comprises a lower end structure or bottom nozzle 12 for supporting the assembly on the lower core plate (not shown) in the core region of a reactor (not shown), control-rod guide tubes or thimbles 14 extending upward from the bottom nozzle 12, transverse support grids 16 spaced apart along the guide thimbles 14, an organized array of elongated fuel rods 18 transversely spaced and supported by the grids 16, an instrumentation tube 20 in the center of the fuel assembly, and an upper end structure or top nozzle 22 attached to the upper ends of the guide thimbles 14. Each of the fuel rods 18 contains nuclear fuel pellets 24 composed of fissile material and is sealed at its opposite ends by means of end plugs 26, 28. A plenum spring 30 disposed between the upper end plug 26 and the pellets 24 maintains the later firmly stacked.

The fissioning process is controlled by means of control rods 32 reciprocally movable in the guide thimbles 14. For this purpose, the top nozzle 22 has operatively associated therewith a rod cluster control mechanism 34 which includes an internally threaded cylindrical hub member 36 with a plurality of radial arms 38 each of which is connected to a control rod 32, the control mechanism 34 being operable to move the control rods 32 up and down in the guide thimbles 14, all as well known in the art.

As mentioned hereinbefore, and as likewise well known in the art, each support grid 16 consists of outer and a multitude of interleaved inner straps joined as an egg-crate-like structure with open cells through which the fuel rods 18 extend and which are defined by strap portions having resilient fuel-rod supporting springs formed out of the metal thereof.

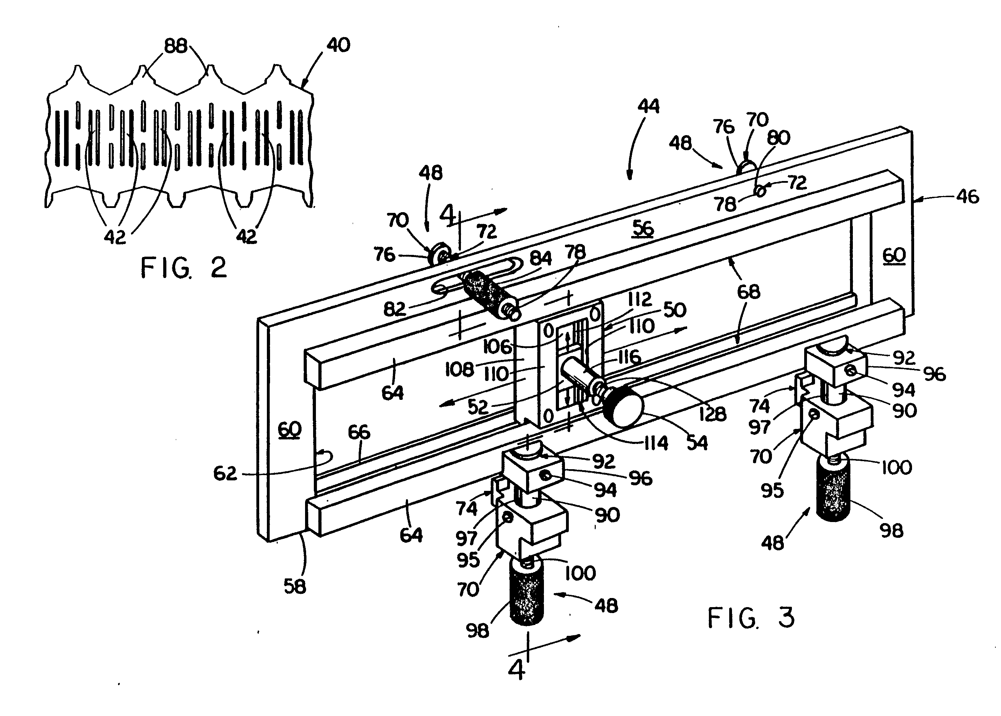

Referring to Fig. 2, it illustrates a portion of an outer strap 40 provided with resilient springs 42 which are formed out of the strap metal and project from the cell-defining side thereof, i. e. inwards of the cells (not shown) partially defined by the outer strap 40. As also initially explained herein, some of these resilient springs 42 on occasion become deformed so as to protrude in the wrong direction, namely, from the outer side of the outer strap and outwards of the grid, in which event they must be restored or reset to their original and proper shape.

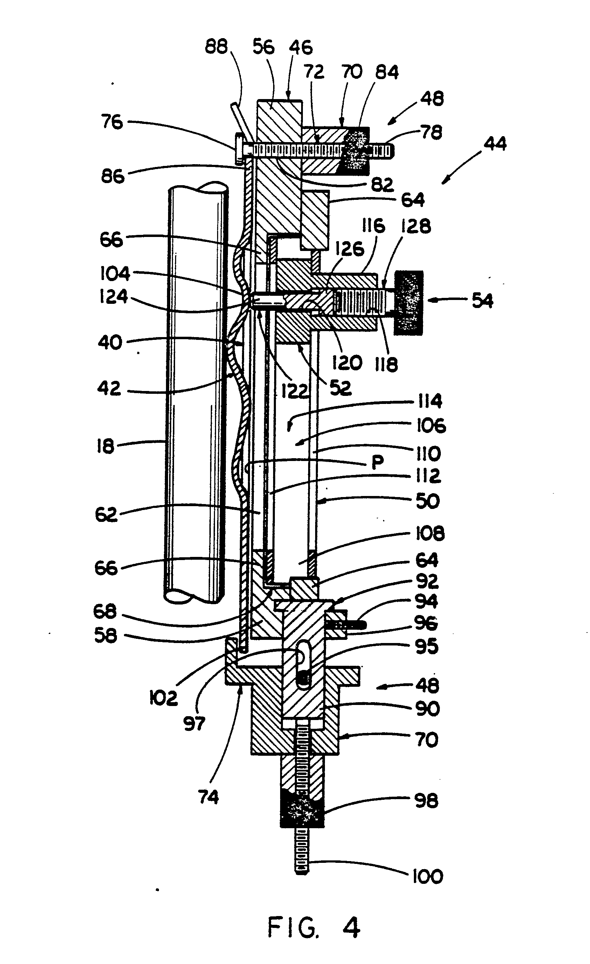

Apparatus for performing such grid spring repair in accordance with the invention is illustrated in Figs. 3 and 4. In Fig. 4, this apparatus, generally designated with reference numeral 44, is shown attached to the outer strap 40 for use in restoring an outwardly deformed grid spring 42 to the proper side of the plane P of the strap, namely, to the side facing the fuel rod 18 extending through the grid cell partially defined by the strap 40.

Basically, the grid spring repair apparatus 44 comprises a support frame 46, means 48 for attaching the support frame 46 to the outer grid strap to be repaired, an outer slide 50 supported on the frame 46, an inner slide 52 supported on the outer slide, and a spring-resetting mechanism 54. More specifically, the support frame 46 of the repair apparatus 44 is formed by a plurality of interconnected top, bottom and side members 56, 58, 60 defining a generally rectangular opening 62. The frame 46 has also a pair of spaced-apart front and rear rails 64, 66 extending on each of the top and bottom members 56, 58 along the upper and lower sides of the opening 62. The pairs of rails 64, 66 together define a guide channel, indicated at 68, which extends therebetween and along the opening 62 in a direction paralleling the outer grid strap 40 and transversely across the strap spring 42 when the frame 46 is mounted to the grid 16.

For attaching the frame 46 to the outer grid strap 40 so that the frame opening 62 is aligned with the outwardly protruding spring 42 to be repaired, the attaching means 48 includes frame attaching devices 70 mounted on the frame 46 above and below the frame opening 62. At least some of the devices 70 are adjustable to enable the frame 46 to be located and secured in a stationary position on the outer strap 40 such that the frame opening 62 is maintained in alignment with the outwardly deformed spring 42.

Preferably, the frame attaching devices 70 consist of a pair of clips 74, and a pair of screws 72 each having a head 76 and a threaded stem 78. One of the screws 72 extends through and is threadedly engaged in a tapped hole 80 formed in the top member 56 of the frame 46, whereas the other screw 72 has its stem 78 freely extending through· and projecting from an elongate hole 82, likewise formed in the top member 56 of the frame 46, and has a knurled and internally threaded sleeve 84 threadedly disposed on the stem portion which projects from the elongate hole 82. Thus, with the sleeve 84 loosened, the screw 72 is adjustable in its position along the elongate hole 82, allowing it to be positioned as desired, such as between two of several mixing vanes 88 (see also Fig. 2) projecting from the upper edge of the outer grid strap 40. The heads 76 of both screws 72 are sized to extend over and catch on upper edge portions, such as edge portion 86 (Fig. 4), of the outer grid strap 40. Thus, by tightening the screw 72 in the tapped hole 80 against an upper edge portion of the grid strap 40 and tightening the knurled sleeve 84 on the other screw 72 to draw its head 76 against the strap portion therebeneath, the frame 46 is securely positioned on the grid strap 40.

Each of the clips 74 is mounted for vertical movement along the shank 90 of a pin 92 stationarily mounted by a set screw 94 through an outwardly projecting bracket 96 on the bottom frame member 58. The clip 74 is held in the correct angular orientation on the pin shank 90 by a pin 95 extending through a groove 97 in the shank 90. The clip 74 can be set at any selected vertical position relative to the frame 46 by rotating an internally threaded knurled sleeve 98 on a threaded stem 100 extending downwardly from the pin shank 90. In this manner, the clip 74, being designed to extend under and catch on a lower edge portion 102 of the outer grid strap 40, can be drawn toward the lower edge portion 102 of the strap so as to capture it between the clip 74 and the frame 46.

Once the support frame 46 is attached to the outer strap 40 by means of the screws 72 and clips 74, the spring reset mechanism 54 can be moved to any position within the frame opening 62 to align it with the protruding portion 104 of the grid strap spring 42. Such alignment is carried out by first moving the outer slide 50 to the desired position along the opening 62 between the frame side members 60 and then by moving the inner slide 52 to the desired position along a window-like opening 106 defined in the outer slide 50 between the top and bottom members 56, 58 of the frame 46.

The outer slide 50 is in the form of a rectangular housing 108 having a pair of spaced front and rear vertical flanges 110, 112 on opposite lateral sides thereof. The flanges 110, 112 define the opening 106 in the housing 108 and also a guideway, as indicated at 114, extending between the flanges 110, 112 and along the opening 106 in a direction paralleling the outer strap spring 42 and generally orthogonal to the direction of the guide channel 68 defined by the rails 64, 66 on the support frame 14. The outer slide housing 108 is mounted in the guide channel 68 of the frame 46 for reciprocable sliding movement along the frame opening 62 between the lateral sides thereof permitting its opening 106 to be aligned with the outwardly protruding portion 104 of the spring 42 on the outer strap 40.

The inner slide 52 is in the form of a rectangular plate or block which supports the spring reset mechanism 54. The inner slide 52 is mounted in the guideway 114 of the outer slide 50 for reciprocable sliding movement between the upper and lower ends of the opening 106 in the slide housing 108 permitting the spring reset mechanism 54 to be aligned with the protruding portion 104 of the spring 42 on the outer strap 40.

The spring reset mechanism 54, operable to reset the protruding spring 42 to a nonprotruding position relative to the plane P of the outer strap 40, includes a cylindrical sleeve 116 which is disposed on and extends from the inner slide 52, and which has an axial bore 118 aligned with a smaller-diameter passage 120 through the inner slide 52. The reset mechanism 54 includes further a reset pin 122 which has a stem 124 slidably extending through the passage 120 and a larger head 126 slidably disposed in an inner portion of the axial bore 118, and it includes also an adjustable screw 128 which is threaded into a tapped outer portion of the axial bore 118 of the sleeve 116 on the inner slide 52. When the screw 128 is rotated in the appropriate direction, it moves axially against the head 126 of the resent pin 122 to move the pin stem 124 toward and up against the protruding portion 104 of the spring 42, as seen in Fig. 4. Then, upon further rotation of the screw 128, the protruding spring portion 104 is deformed so as to restore the spring 42 to its proper original position relative to the plane P of the outer grid strap 40.

Thus, it is seen that outwardly protruding outer grid strap springs 42 can be repaired by applying a substantially constant load to the spring and without the necessity of applying an impact force to the fuel assembly 10. Moreover, the particular construction of the reset pin 122 enables the latter to be moved toward the plane P of the outer strap 40 only to a predetermined extent, namely, until its head 126 bottoms out in the axial bore 118 of the sleeve 116. Therefore, a repeatable and uniform repair procedure is assured.

## Claims

1. A grid-spring repair apparatus for repairing a spring formed on an outer strap of a nuclear fuel assembly grid and having a portion which abnormally protrudes outward from the strap, characterized by :

(a) a support frame (46) defining an elongate opening (62) and having means (64, 66) defining guide channels (68) along opposite longitudinal sides of the elongate cpening ;

(b) attaching means (70) for attaching said support frame (46) to said outer strap (40) of the fuel-assembly grid (16) in a manner such that said elongate opening (62) extends over and across said spring (42) on the outer strap ;

(c) an outer slide (50) which defines a window-like opening (106) and is supported in said guide channels (68) for reciprocable movement of the outer slide within said elongate opening (62) in the longitudinal direction thereof to permit said window-like opening (106) to be aligned with the abnormally protruding portion (104) of the spring, said outer slide (50) including means defining a guideway (114) which extends along the window-like opening in a second direction substantially orthogonal with respect to said longitudinal direction ;

(d) a spring resetting mechanism (54) for restoring said abnormally protruding portion (104) of the spring to a normal position thereof relative to the outer strap (40) ; and

(e) an inner slide (52) supporting said spring resetting mechanism (54) and supported in said guideway (114) for reciprocable movement of said inner slide within the window-like opening (106) of the outer slide in said second direction to permit the spring resetting mechanism to be aligned with the abnormally protruding portion (104) of said spring (42).

2. A grid-spring repair apparatus according to claim 1, characterized in that said support frame (46) comprises a plurality of interconnected members (56, 58, 60) defining said elongate opening (62) in substantially rectangular configuration, and said means (64, 66) defining said guide channels (68) comprise pairs of rails (64, 66) connected to the interconnected members (56, 58, 60) and extending along the respective longitudinal sides of the elongate opening (62).

3. A grid-spring repair apparatus according to claim 1 or 2, characterized in that said attaching means (48) comprises several frame attaching devices (70) mounted on said support frame (46) and spaced apart in said longitudinal direction on opposite sides of said elongate opening (62), at least one of said frame attaching devices (70) being adjustable on and relative to the mounting frame.

4. A grid-spring repair apparatus according to claim 3, characterized in that said frame attaching devices (70) inlude screws (72) each having a head (76) adapted to extend over and catch on a portion of one edge (86) of said outer strap (40), said screws (72) being mounted on the frame (46) adjacent one side of said elongate opening (62) and adapted to be tightened thereon so as to capture the respective edge portions of the outer strap between the heads (76) of the screws and said frame (46).

5. A grid-spring repair apparatus according to claim 4, characterized in that said frame attaching devices (70) include several clips (74) adapted to catch on portions of the opposite edge (102) of the outer strap (40), said clips (74) being mounted on said frame (46) adjacent the opposite side of said elongate opening (62) and adjustable toward and away from the frame (46) so as to be movable to positions for capturing said edge portions of the strap between the clips and the frame.

6. A grid-spring repair apparatus according to any one of the preceding claims, characterized in that said outer slide (50) is in the form of a rectangular housing (108) with means defining said guideway (114) formed in sides of the rectangular housing which extend in said second direction.

7. A grid-spring repair apparatus according to claim 6, characterized in that said inner slide (52) is in the form of a block which supports said spring resetting mechanism (54) and is slideably supported in said guideway (114).

8. A grid-spring repair apparatus according to any one of the preceding claims, characterized in that said spring resetting mechanism (54) comprises a resetting pin (122) which is slideably supported in said inner slide (52), and a screw (128) which is threadedly supported in said inner slide substantially in axial alignment with said resetting pin (122) and is operable to move the latter in a spring-restoring direction toward and against the abnormally protruding portion (104) of the spring (62) in a manner such as to urge the abnormally protruding portion toward the original normal position thereof.

9. A grid-spring repair apparatus according to claim 8, characterized in that said resetting pin (122) has an enlarged portion (126) which cooperates with a stop surface in the inner slide (52) to limit movement of the resetting pin in said-restoring direction.

## Patentansprüche

1. Federausbesserungsanordnung zum Ausbessern einer an einem Aussensteg eines Kernbrennelement-Abstandhaltergitters ausgebildeten Feder, von der ein Teil abnormal von dem Steg nach aussen vorspringt, gekennzeichnet durch :

(a) einen Tragrahmen (46) mit einer länglichen Öffnung (62) und Mitteln (64, 66), welche an einander gegenüberliegenden Längsseiten der länglichen Öffnung entlang Führungsrinnen (68) bilden ;

(b) Befestigungsmittel (70) zum Anbringen des Tragrahmens (46) an besagtem Aussensteg (40) des Brennelementgitters (16) derart, dass die längliche Öffnung (62) sich quer über die am Aussensteg befindliche Feder (42) erstreckt ;

(c) einen eine fensterartige Öffnung (106) aufweisenden Aussenschieder (50), der in den Führungsrinnen (68) abgestützt und innerhalb der länglichen Öffnung (62) in deren Längsrichtung zwecks Ausrichtung der fensterartigen Öffnung (106) mit dem abnormal vorspringenden Teil (104) der Feder hin- und herbewegbar ist, wobei der Aussenchieber (50) Mittel aufweist, welche eine entlang seiner fensterartigen Öffnung in einer zweiten, zu besagter Längsrichtung im wesentlichen rechtwinkligen Richtung verlaufende Führungsbahn (114) bilden ;

(d) einen Federrichtmechanismus (54) zum Zurueckbringen des abnormal vorspringenden Federteiles (104) in eine in Bezug auf den Aussensteg (40) normale Stellung ; und

(e) einen den Federrichtmechanismus (54) tragenden Innenschieber (52), welcher in der Führungsbahn (114) abgestützt und innerhalb der fensterartigen Öffnung (106) des Aussenschiebers zwecks Ausrichtung des Federrichtmechanismus mit dem abnormal vorspringenden Teil (104) der Feder (42) in besagter zweiter Richtung hin- und herbewegbar ist.

2. Federausbesserungsanordnung nach Anspruch 1, dadurch gekennzeichnet, dass der Tragrahmen (46) aus mehreren miteinander verbundene, der länglichen Öffnung (62) eine im wesentlichen rechteckige Form gebenden Teilen (56, 58, 60) besteht und die die Führungsrinnen (68) bildenden Mittel (64, 66) Schienenpaare sind, welche mit den miteinander verbundenen Teilen (56, 58, 60) verbunden sind und entlang der betreffenden Längsseiten der länglichen Öffnung (62) verlaufen.

3. Federausbesserungsanordnung nach Anspruch 1 oder 2, dadurch gekennzeichnet, dass die Befestigungsmittel (48) aus mehreren Rahmenanbringungsvorrichtungen (70) bestehen, welche an dem Tragrahmen (46) angebracht und zu beiden Seiten der länglichen Öffnung (62) in besagter Längsrichtung voneinander beabstandet angeordnet sind, wobei zumindest eine der Rahmenanbringungsvorrichtungen (70) an dem Tragrahmen in Bezug auf diesen verstellbar ist.

4. Federausbesserungsanordnung nach Anspruch 3, dadurch gekennzeichnet, dass die Rahmenanbringungsvorrichtungen (70) Schrauben (72) aufweisen, die mit je einem Kopf (76) zum überlappenden Angreifen an einem Teil einer Kante (86) des Aussensteges (40) versehen und neben der länglichen Öffnung (62) auf einer Seite von derselben am Tragrahmen angeordnet und an ihm zwecks Festlegens der betreffenden Kantenteil des Aussensteges zwischen den Schraubenköpfen (76) und dem Rahmen (46) festschraubbar sind.

5. Federausbesserungsanordnung nach Anspruch 4, dadurch gekennzeichnet, dass die Rahmenanbringungsvorrichtungen (70) mehrere Klammern (74) zum Angreifen an Teilen der gegenüberliegenden Kante (102) des Aussensteges (40) aufweisen, welche neben der länglichen Öffnung (62) auf der anderen Seite von derselben am Rahmen (46) angebracht und in Richtung zum Rahmen hin und von ihm hinweg verstellbar und dadurch in Stellungen zum Festlegen besagter Kantenteile des Aussensteges zwichen den Klammern und dem Rahmen bringbar sind.

6. Federausbesserungsanordnung nach einem der vorangehenden Ansprüche, dadurch gekennzeichnet, dass der Aussenschieber (50) die Form eines rechteckigen Gehäuses (108) hat, in dessen sich in besagter zweiten Richtung erstreckenden Seitem Mittel ausgebildet sind, welche die Führungsbahn (114) bilden.

7. Federausbesserungsanordnung nach Anspruch 6, dadurch gekennzeichnet, dass der Innenschieber (52) die Form eines den Federrichtmechanismus (54) tragenden und sich in der Führungsbahn (114) gleitend abstützenden Blockes aufweist.

8. Federausbesserungsanordnung nach einem der vorangehenden Ansprüche, dadurch gekennzeichnet, dass der Federrichtmechanismus (54) aus einem sich im Innenschieber (52) gleitend abstützenden Richtbolzen (122) und einer Schraube (128) besteht, welche sich in im wesentlichen achsialer Ausrichtung mit dem Richtbolzen im Innenschieber (52) abstützt und mit ihm in Gewindeeingriff steht, derart, dass die Schraube (128) bei entsprechender Drehung den Richtbolzen (122) in Federrückholrichtung gegen den abnormal vorspringenden Teil (104) der Feder (62) treibt und dadurch den vorspringenden Federteil in seine ursprüngliche Normalstellung zurückdrückt.

9. Federausbesserungsanordnung nach Anspruch 8, dadurch gekennzeichnet, dass der Richtbolzen (122) einen erweiterten Teil (126) aufweist, welcher im Zusammenwirken mit einer im Innenschieber (52) vorgesehenen Anschlagsfläche die Bewegung des Richtbolzens in der Federrückholrichtung begrenzt.

## Revendications

1. Appareil de réparation de ressort de grille pour réparer un ressort formé sur une bande de ceinturage extérieure de grille d'assemblage combustible nucléaire et ayant une partie qui dépasse anormalement vers l'extérieur de la bande, caractérisé par :

(a) un cadre (46) de support définissant une ouverture allongée (62) et ayant des moyens (64, 66) définissant des voies de guidage (68) le long des côtés longitudinaux opposés de l'ouverture allongée ;

(b) un moyen de fixation (70) pour fixer ledit cadre (46) de support à ladite bande extérieure (40) de la grille (16) d'assemblage nucléaire de manière que ladite ouverture allongée (62) s'étende sur et en travers dudit ressort (42) sur la bande extérieure ;

(c) un coulisseau extérieur (50) qui définit une ouverture (106) analogue à une fenêtre et est supporté dans lesdites voies de guidage (68) pour le mouvement de va-et-vient du coulisseau extérieur dans ladite ouverture allongée (62) dans le sens longitudinal de celle-ci pour permettre à ladite ouverture (106) analogue à une fenêtre d'être alignée avec la partie anormalement saillante (104) du ressort, ledit coulisseau extérieur (50) comportant des moyens définissant une glissière (114) qui s'étend le long de l'ouverture analogue à une fenêtre dans une seconde direction sensiblement perpendiculaire audit sens logitudinal ;

(d) un mécanisme (54) de réajustement de ressort pour rétablir ladite partie anormalement saillante (104) du ressort dans sa position normale par rapport à la bande extérieure (40) ; et

(e) un coulisseau intérieur (52) supportant ledit mécanisme (54) de réajustement de ressort et supporté dans ladite glissière (114) pour le mouvement de va-et-vient dans l'ouverture (106), analogue à une fenêtre, dudit coulisseau extérieur dans ladite seconde direction pour permettre au mécanisme de réajustement de ressort d'être aligné avec la partie anormalement saillante (104) dudit ressort (42).

2. Appareil de réparation de ressort de grille selon la revendication 1, caractérisé en ce que ledit cadre (46) de support comporte une pluralité d'éléments (56, 58, 60) reliés les uns aux autres et définissant ladite ouverture allongée (62) avec une configuration sensiblement rectangulaire, et lesdits moyens (64, 66) définissant lesdites voies de guidage (68) comprennent des paires de rails (64, 66) reliées aux éléments solidarisés (56, 58, 60) et s'étendant le long des côtés longitudinaux correspondants de l'ouverture allongée (62).

3. Appareil de réparation de ressort de grille selon la revendication 1 ou 2, caractérisé en ce que ledit moyen de fixation (48) comporte plusieurs dispositifs (70) de fixation du cadre montés sur ledit cadre (46) de support et espacés les uns des autres dans ledit sens longitudinal sur les côtés opposés de ladite ouverture allongée (62), au moins l'un desdits dispositifs (70) de fixation du cadre étant réglable sur le cadre de support et par rapport à ce dernier.

4. Appareil de réparation de ressort de grille selon la revendication 3, caractérisé en ce que lesdits dispositifs (70) de fixation du cadre comprennent des vis (72) ayant chacune une tête (76) conçue pour s'étendre sur une partie d'un bord (86) de ladite bande extérieure (40) et pour retenir cette partie, lesdites vis (72) étant montées sur le cadre (46) de manière contiguë à un seul côté de ladite ouverture allongée (62) et conçues pour être serrées sur celui-ci de façon à emprisonner les parties correspondantes de bord de la bande extérieure entre les têtes (76) des vis et ledit cadre (46).

5. Appareil de réparation de ressort de grille selon la revendication 4, caractérisé en ce que lesdits dispositifs (70) de fixation du cadre comprennent plusieurs attaches (74) conçues pour retenir des parties du bord opposé (102) de la bande extérieure (40), lesdites attaches (74) étant montées sur ledit cadre (46) de façon contiguë au côté opposé de ladite ouverture allongée (62) et réglables pour être rapprochées et éloignées du cadre (46) afin de pouvoir être amenées dans des positions permettant d'emprisonner lesdites parties du bord de la bande entre les attaches et le cadre.

6. Appareil de réparation de ressort de grille selon l'une quelconque des revendications précédentes, caractérisé en ce que ledit coulisseau extérieur (50) se présente sous la forme d'un boîtier rectangulaire (108), avec un moyen qui s'étend dans ladite seconde direction pour définir ladite glissière (114) formée dans les côtés du boîtier rectangulaire.

7. Appareil de réparation de ressort de grille selon la revendication 6, caractérisé en ce que ledit coulisseau intérieur (52) se présente sous la forme d'un bloc qui supporte ledit mécanisme (54) de réajustement de ressort et est supporté pour pouvoir coulisser dans ladite glissière (114).

8. Appareil de réparation de ressort de grille selon l'une quelconque des revendications précédentes, caractérisé en ce que ledit mécanisme (54) de réajustement de ressort comporte un doigt (122) de réajustement supporté de façon coulissante dans ledit coulisseau intérieur (52), et une vis (128) vissée dans ledit coulisseau intérieur sensiblement dans l'axe dudit doigt (122) de réajustement et manœuvrable pour déplacer ce dernier dans le sens de réajustement du ressort vers et contre la partie (104) anormalement saillante du ressort (62) de manière à pousser la partie anormalement saillante vers la position normale d'origine de celle-ci.

9. Appareil de réparation de ressort de grille selon la revendication 8, caractérisé en ce que ledit doigt (122) de réajustement a une partie agrandie (126) qui coopère avec une surface de butée du coulisseau intérieur (52) pour limiter le déplacement du doigt de réajustement dans ledit sens de réajustement du ressort.

FIG. 1

FIG. 2

FIG. 3

EP 0 218 353 B1

FIG. 4